# EUROPÄISCHE PATENTSCHRIFT

(11) **EP 3 169 508 B1**
(45) Veröffentlichungstag und Bekanntmachung des Hinweises auf die Patenterteilung: **20.03.2019**
(21) Anmeldenummer: 15739245.7
(22) Anmeldetag: 15.07.2015
(51) Int. Cl.: B29C 63/34, F16L 55/165, B29C 65/00

(54) **SCHLAUCHLINER MIT EINER ZU EINEM FOLIENSCHLAUCH VERBUNDENEN, VLIESKASCHIERTEN FOLIENBAHN**
TUBE LINER WITH A FLEECE-BACKED FILM WEB CONNECTED TO FORM A FILM TUBE
GAINE DE RÉFECTION POUR CONDUITE COMPRENANT UN FILM CONTINU RECOUVERT D'UN NON-TISSÉ ET RELIÉ À UNE GAINE DE FILM

(30) Priorität: 18.07.2014 DE 102014214029
(43) Veröffentlichungstag der Anmeldung: 24.05.2017
(73) Patentinhaber: BKP Berolina Polyester GmbH & Co. KG, 16727 Velten (DE)
(72) Erfinder: ODENWALD, Ralf, 16727 Velten (DE)
(74) Vertreter: Kohler Schmid Möbus Patentanwälte
(86) Internationale Anmeldenummer: PCT/EP2015/066138
(87) Internationale Veröffentlichungsnummer: WO 2016/008914

(56) Entgegenhaltungen:
- EP-A1- 0 863 359
- EP-A1- 2 692 507
- WO-A2-2005/090848

## Beschreibung

Die Erfindung betrifft einen Schlauchliner zur Auskleidung von Rohrleitungen mit einem Innenfolienschlauch, einem Außenfolienschlauch und einer dazwischen angeordneten Fasermateriallage, die mit einem aushärtbaren Material imprägniert ist, wobei mindestens einer der beiden Folienschläuche aus mindestens einer Schlauchbahn gebildet ist, die eine Trägerfolie und eine Vliesschicht aufweist, welche auf die der Fasermateriallage zugewandte Folienseite der Trägerfolie aufgebracht ist, und deren in Schlauchumfangsrichtung einander überlappende Bahnränder miteinander verbunden sind.

Ein derartiger Schlauchliner ist beispielsweise durch die DE 10 2012 015 047 A1 bekannt geworden.

Nicht begehbare schadhafte Rohrleitungen werden mit so genannten Relining-Verfahren saniert, wobei vor Ort aus aushärtbaren Formmassen ein Neurohr hergestellt wird. Dazu wird ein mit aushärtbarem Kunststoff getränkter Träger- bzw. Verstärkungswerkstoff (Schlauchliner) in ein zu sanierendes Altrohr eingebracht, wobei als aushärtbarer Kunststoff oft lichthärtende Harze verwendet werden. Im Fall von lichthärtenden Harzen wird der eingebrachte Schlauchliner positioniert und mittels Druckluft an die Innenwandung des Altrohrs gepresst, und dann werden ein oder mehrere Strahler, insbesondere UV-Strahler, durch den Schlauchliner bewegt, um den Schlauchliner von innen mittels der abgegebenen Strahlung auszuhärten.

Der aus DE 10 2012 015 047 A1 bekannte Schlauchliner umfasst einen Innenfolienschlauch und eine auf dem Innenfolienschlauch angeordnete Lage aus Fasermaterial, welches mit einem durch UV-Licht härtbaren Reaktionsharz getränkt ist. Der Innenfolienschlauch enthält ein styroldichtes, thermisch verschweißbares Trägermaterial, das auf seiner dem Fasermaterial zugewandten Seite eine aufkaschierte Vliesschicht aufweist und das einen sich entlang des Innenfolienschlauchs erstreckenden Überlappungsbereich umfasst, in welchem die Randabschnitte des Trägermaterials thermisch miteinander verschweißt sind. Die Vliesschicht ist auf der Außenseite des radial innen liegenden Randabschnitts im Überlappungsbereich thermisch mit dem Trägermaterial an der Unterseite des radial außen liegenden Randabschnitts verschweißt, wobei der radial außen liegende Randabschnitt im Überlappungsbereich auf seiner Außenseite eine Struktur aufweist, welche ein dauerhaftes Anhaften von Reaktionsharz ermöglicht. Durch Ultraschallenergie wird das im Überlappungsbereich zwischen einer PE-Schicht des radial außen liegenden Randabschnittes und einer PE-Schicht des radial innen liegenden Randabschnitts liegende Vliesmaterial soweit erwärmt, bis das thermoelastische Kunststoffmaterial der PE-Schicht schmilzt, sich verflüssigt und in das Vliesmaterial eindringt. Nach Erkalten wird eine hochfeste und luftdichte thermische Schweißverbindung zwischen den beiden Randabschnitten erhalten.

Weiterhin ist aus der WO 2005/090848 A2 ein Schlauchliner mit einem Innenfolienschlauch bekannt, der durch eine überlappende Schlauchlage gebildet ist, deren überlappende Bahnränder miteinander verschweißt sind.

Es ist demgegenüber die Aufgabe der Erfindung, einen Schlauchliner der eingangs genannten Art dahingehend weiterzubilden, dass die Folienenden bei gleichzeitig geringerem technischem Aufwand besser miteinander verbunden sind.

Diese Aufgabe wird erfindungsgemäß dadurch gelöst, dass der der Fasermateriallage im Überlappungsbereich abgewandte Bahnrand einzig durch die Trägerfolie gebildet ist, die auf dem Überlappungsbereich über die Vliesschicht übersteht und die unmittelbar mit der Trägerfolie des der Fasermateriallage im Überlappungsbereich zugewandten Bahnrandes verklebt oder verschweißt ist.

Erfindungsgemäß sind die Trägerfolien der beiden überlappenden Bahnränder unmittelbar miteinander verbunden, wobei die der Fasermateriallage zugewandten Folienseite dennoch vollflächig mit der Vliesschicht abgedeckt ist. Die im Überlappungsbereich aufeinanderliegenden Bahnränder der Trägerfolie(n) sind in Schlauchlängsrichtung miteinander verklebt oder verschweißt, wobei zur Verschweißung alle bekannten Folienschweißverfahren eingesetzt werden können, also z.B. Ultraschallschweißen oder thermisches Schweißen ("Heizelement-Schweißen"). Der erfindungsgemäße Schlauchliner kann lichthärtende Harze oder auch andere aushärtbare Materialien aufweisen, wie z.B. durch Kalthärtung aushärtende Materialien oder durch Wärme aushärtende Materialien, welche durch Warmwasser oder Dampf ausgehärtet werden, mit denen der Schlauchliner beaufschlagt wird.

Besonders vorteilhaft sind sowohl der Innenfolienschlauch als auch der Außenfolienschlauch jeweils aus mindestens einer Schlauchbahn gebildet, die eine Trägerfolie und eine Vliesschicht aufweist, welche auf die der Fasermateriallage zugewandte Folienseite der Trägerfolie aufgebracht ist, und deren in Schlauchumfangsrichtung einander überlappende Bahnränder miteinander verbunden sind, wobei die der Fasermateriallage im Überlappungsbereich abgewandten Bahnrand jeweils einzig durch die Trägerfolie gebildet sind, die auf dem Überlappungsbereich über die Vliesschicht übersteht und die unmittelbar mit der Trägerfolie des der Fasermateriallage im Überlappungsbereich zugewandten Bahnrandes verschweißt oder verklebt ist.

Vorzugsweise schließen an dem der Fasermateriallage im Überlappungsbereich zugewandten Bahnrand die Trägerfolie und die aufkaschierte Vliesschicht bündig miteinander ab.

Der Folienschlauch kann aus einer einzigen oder aus mehreren Schlauchbahnen (Flachfolien) gebildet sein. Der letztere Fall ist insbesondere dann vorteilhaft, wenn ein Folienschlauch hergestellt werden soll, der die maximale Breite einer zur Verfügung stehenden Flachfolie übersteigt. In einer Variante dieser Ausführungsform weisen die Schlauchbahnen jeweils sowohl einen vlieskaschierten bündigen Bahnrand als auch einen überstehenden vlieslosen Trägerfolienrand auf. In einer anderen Variante weist die eine Schlauchbahn zwei vlieskaschierte bündige Bahnränder und die andere Schlauchbahn überstehende vlieslose Trägerfolienränder auf.

Die der Fasermateriallage zugewandte Seite des verschweißten Folienschlauchs ist vollflächig mit der Vliesschicht abgedeckt, wobei die Vliesschichten der beiden Bahnränder Stoß an Stoß aneinander anliegen können. Alternativ kann der Bahnrand, an dem die Trägerfolie und die Vliesschicht bündig miteinander abschließen, etwas über den anderen vlieslosen Bahnrand hinausragen.

Die Trägerfolie kann durch eine einzige Folienschicht oder eine Verbundfolie mit mehreren Folienschichten gebildet sein. Im letzteren Fall bestehen die beiden äußeren Folienschichten vorzugsweise aus dem gleichem Material, da sie dann einfacher miteinander zu verschweißen oder verkleben sind.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a, 1b: den Querschnitt (Fig. 1a) einer ersten Ausführungsform des erfindungsgemäßen Schlauchliners mit einem Innenfolienschlauch, der durch eine verschweißte Schlauchbahn gebildet ist, sowie die Schlauchbahn im noch nicht verschweißten Zustand (Fig. 1b);
- Fign. 2a, 2b: den Querschnitt (Fig. 2a) eines aus zwei miteinander verschweißten Schlauchbahnen gebildeten Innenfolienschlauchs einer zweiten Ausführungsform des erfindungsgemäßen Schlauchliners, sowie die zwei Schlauchbahnen im noch nicht verschweißten Zustand (Fig. 2b);
- Fign. 3a, 3b: den Querschnitt (Fig. 3a) eines aus zwei miteinander verschweißten Schlauchbahnen gebildeten Innenfolienschlauchs einer dritten Ausführungsform des erfindungsgemäßen Schlauchliners, sowie die zwei Schlauchbahnen im noch nicht verschweißten Zustand (Fig. 3b);
- Fign. 4a, 4b: den Querschnitt (Fig. 4a) einer vierten Ausführungsform des erfindungsgemäßen Schlauchliners, bei dem der Außenfolienschlauch durch eine verschweißte Schlauchbahn gebildet ist, sowie die Schlauchbahn im noch nicht verschweißten Zustand (Fig. 4b); und
- Fig. 5: eine Verschweißungsvariante des Schlauchliners der Fign. 1 bis 4.

In der folgenden Figurenbeschreibung werden für gleiche bzw. funktionsgleiche Bauteile identische Bezugszeichen verwendet.

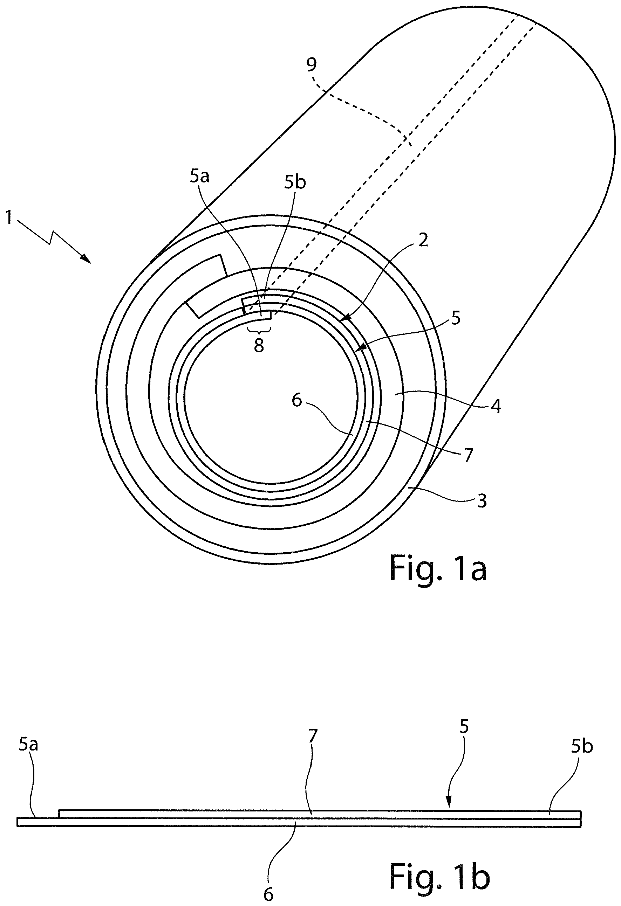

Der in **Fig. 1a** gezeigte Schlauchliner **1** dient zum Auskleiden eines zu sanierenden Altrohrs und umfasst einen für Licht, insbesondere für UV-Licht, transparenten Innenfolienschlauch **2,** einen Außenfolienschlauch **3** und eine dazwischen vorgesehene, sich in Schlauchumfangsrichtung ringsum erstreckende flexible Fasermateriallage **4,** die mit lichthärtendem, insbesondere UV-lichthärtendem Material (Harz) getränkt bzw. imprägniert ist. Die Fasermateriallage 4 ist eine Trägerbahn, deren sich in Schlauchumfangsrichtung erstreckende Bahnenden überlappen, um so ein Aufweiten des Schlauchliners 1 auf unterschiedliche Durchmesser zu ermöglichen. Statt der gezeigten einen Fasermateriallage 4 können auch mehrere Fasermateriallagen vorhanden sein, die sich jeweils umgeben.

Wie in **Fig. 1b** gezeigt, ist der Innenfolienschlauch 2 aus einer Schlauchbahn (Flachfolie) **5** gebildet, die eine Trägerfolie **6** und eine Vliesschicht **7** aufweist, welche auf die der Fasermateriallage 4 zugewandte Außenseite der Trägerfolie 6 aufkaschiert ist. Die beiden Bahnränder **5a, 5b** der Schlauchbahn 5 überlappen einander in Schlauchumfangsrichtung und sind in ihrem Überlappungsbereich **8** miteinander verklebt oder verschweißt. An dem im Überlappungsbereich 8 radial außen liegenden Bahnrand 5b schließen die Trägerfolie 6 und die aufkaschierte Vliesschicht 7 bündig miteinander ab. Der im Überlappungsbereich 8 radial innen liegende Bahnrand 5a ist ohne Vliesschicht ausgestattet, also im Überlappungsbereich 8 einzig durch die Trägerfolie 6 gebildet, die auf dem Überlappungsbereich 8 über die Vliesschicht 7 übersteht. Im Überlappungsbereich 8 liegen die überstehende Trägerfolie 6 des Bahnrandes 5a und die Trägerfolie 6 des Bahnrandes 5b unmittelbar aufeinander und sind miteinander in Schlauchlängsrichtung verklebt oder verschweißt. Diese Längsklebung oder -verschweißung ist in Fig. 1a mit **9** bezeichnet. Die der Fasermateriallage 4 zugewandte Außenseite des so verschweißten Innenfolienschlauchs 2 ist somit vollflächig mit der Vliesschicht 7 abgedeckt. Da auch die Vliesschicht 7 mit dem lichthärtenden Material benetzt ist, ist nach Aushärten des lichthärtenden Materials der Innenfolienschlauch 2 über seine Vliesschicht 7 fest mit der Fasermateriallage 4 verbunden.

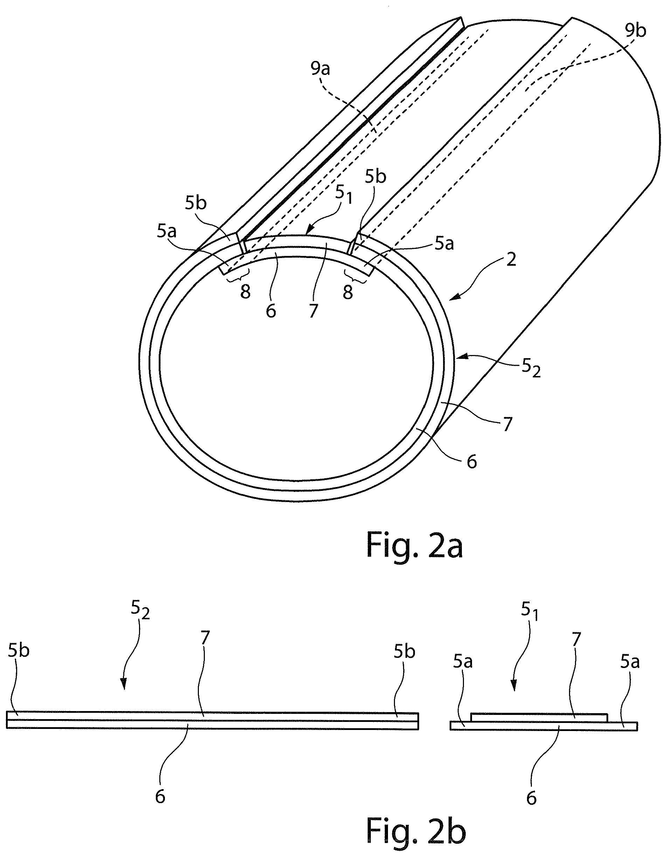

Vom Innenfolienschlauch der Fig. 1a unterscheidet sich der in **Fig. 2a** gezeigte Innenfolienschlauch 2 dadurch, dass hier der Innenfolienschlauch 2 aus zwei Schlauchbahnen **5₁, 5₂** gebildet ist, die jeweils eine verschweißbare Trägerfolie 6 und eine Vliesschicht 7 aufweisen, welche auf die der Fasermateriallage 4 zugewandte Außenseite der Trägerfolie 6 aufkaschiert ist. Wie in **Fig. 2b** gezeigt, schließen an beiden Bahnrändern 5b der linken Schlauchbahn 5₂ die Trägerfolie 6 und die aufkaschierte Vliesschicht 7 bündig miteinander ab, während bei der rechten Schlauchbahn 5₁ die beiden Bahnränder 5a einzig durch die Trägerfolie 6 gebildet sind, die jeweils über die Vliesschicht 7 übersteht. Die beiden Bahnränder 5a, 5b der beiden Schlauchbahn 5₁, 5₂ überlappen einander in Schlauchumfangsrichtung, wobei die überstehende Trägerfolie 6 der Schlauchbahn 5₁ im Überlappungsbereich 8 jeweils radial innen angeordnet ist. Im Überlappungsbereich 8 liegen die überstehende Trägerfolie 6 der Bahnränder 5a und die Trägerfolie 6 der Bahnränder 5b unmittelbar aufeinander und sind miteinander in Schlauchlängsrichtung verklebt oder verschweißt. Diese Längsklebungen oder -verschweißungen sind in Fig. 2a mit **9a, 9b** bezeichnet. Die der Fasermateriallage 4 zugewandte Außenseite des so verschweißten Innenfolienschlauchs 2 ist somit vollflächig mit der Vliesschicht 7 abgedeckt.

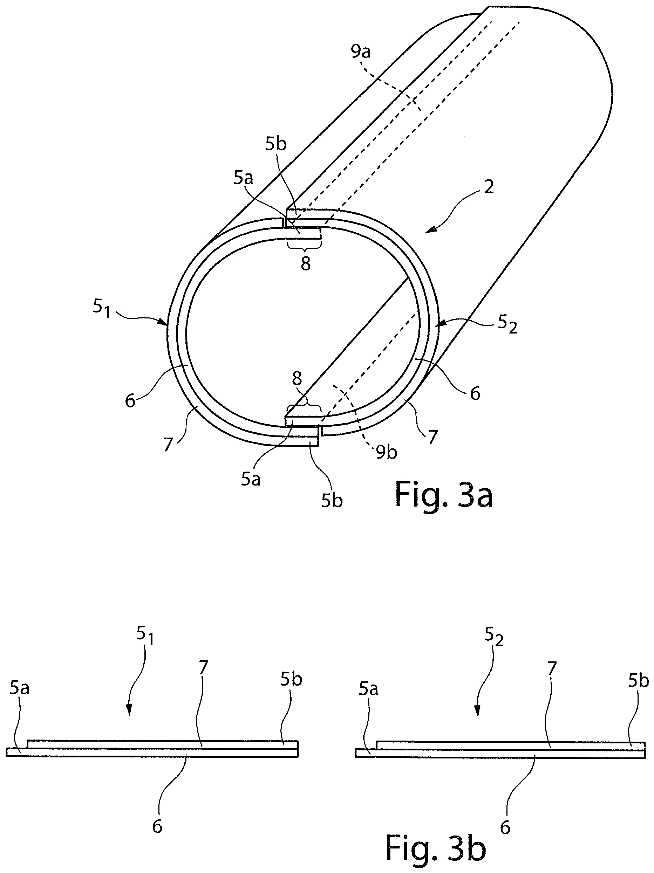

Vom Innenfolienschlauch der Fig. 2a unterscheidet sich der in **Fig. 3a** gezeigte Innenfolienschlauch 2 dadurch, dass hier, wie in **Fig. 3b** gezeigt, die Trägerfolie 6 der beiden Schlauchbahnen 5₁, 5₂ jeweils an dem einem Bahnrand 5a über die Vliesschicht 7 übersteht und an dem anderen Bahnrand 5b bündig mit der Vliesschicht 7 abschließt. Die Bahnränder 5a, 5b der beiden Schlauchbahnen 5₁, 5₂ überlappen einander in Schlauchumfangsrichtung, wobei die überstehenden Trägerfolien 6 der Schlauchbahnen 5₁, 5₂ im Überlappungsbereich 8 jeweils radial innen angeordnet sind. Im Überlappungsbereich 8 liegen die überstehenden Trägerfolien 6 der Bahnränder 5a und die Trägerfolien 6 der Bahnränder 5b unmittelbar aufeinander und sind miteinander in Schlauchlängsrichtung verklebt oder verschweißt. Diese Längsklebungen oder -verschweißungen sind in Fig. 3a mit 9a, 9b bezeichnet. Die der Fasermateriallage 4 zugewandte Außenseite des so verschweißten Innenfolienschlauchs 2 ist somit vollflächig mit der Vliesschicht 7 abgedeckt.

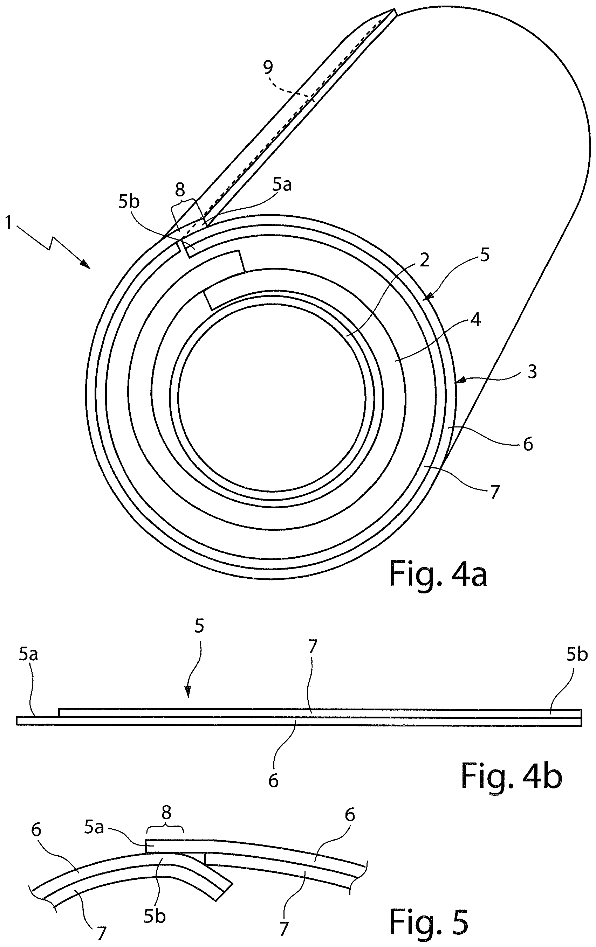

Vom Schlauchliner der Fig. 1a unterscheidet sich der in **Fig. 4a** gezeigte Schlauchliner 1 dadurch, dass hier der Außenfolienschlauch 3 aus einer Schlauchbahn 5 gebildet ist, die eine Trägerfolie 6 und eine Vliesschicht 7 aufweist, welche auf die der Fasermateriallage 4 zugewandte Innenseite der Trägerfolie 6 aufkaschiert ist. Die beiden Bahnränder 5a, 5b der Schlauchbahn 5 überlappen einander in Schlauchumfangsrichtung und sind in ihrem Überlappungsbereich 8 miteinander verklebt oder verschweißt. An dem im Überlappungsbereich 8 radial innen liegenden Bahnrand 5b schließen die Trägerfolie 6 und die aufkaschierte Vliesschicht 7 bündig miteinander ab. Der im Überlappungsbereich 8 radial außen liegende Bahnrand 5a ist ohne Vliesschicht ausgestattet, also im Überlappungsbereich 8 einzig durch die Trägerfolie 6 gebildet, die auf dem Überlappungsbereich 8 über die Vliesschicht 7 übersteht. Im Überlappungsbereich 8 liegen die überstehende Trägerfolie 6 des Bahnrandes 5a und die Trägerfolie 6 des Bahnrandes 5b unmittelbar aufeinander und sind miteinander in Schlauchlängsrichtung verklebt oder verschweißt. Diese Längsklebung oder - verschweißung ist in Fig. 4a mit 9 bezeichnet. Die der Fasermateriallage 4 zugewandte Innenseite des so verschweißten Außenfolienschlauchs 3 ist somit vollflächig mit der Vliesschicht 7 abgedeckt. Statt wie gezeigt aus nur einer einzigen Flachfolie kann der Außenfolienschlauch 3 auch aus mehreren Flachfolien analog zu den Fign. 2 und 3 gebildet sein.

Wie in **Fig. 5** gezeigt, ist es auch möglich, dass der Bahnrand 5b, an dem die Trägerfolie 6 und die aufkaschierte Vliesschicht 7 bündig miteinander abschließen, in Schlauchumfangsrichtung über die zurückversetzte Vliesschicht 7 des anderen Bahnrandes 5a übersteht.

Je nach Breite des Überlappungsbereiches 8 beträgt die Breite des vlieslosen Bahnrandes 5a der in Fign. 1 bis 5 gezeigten Schlauchliner 1 ca. 0,3 bis 10 cm. Die Trägerfolie 6 kann aus einer oder mehreren Schichten gleicher oder unterschiedlicher Werkstoffe bestehen. Bei Trägerfolien 6 in Form von Verbundfolien, die aus mehreren Schichten unterschiedlicher Werkstoffe bestehen, ist es vorteilhaft, wenn zumindest die aufeinander liegenden Folienoberflächen aus gleichem Material bestehen, da diese dann einfacher zu verschweißen oder verkleben sind.

Bei nicht gezeigten Ausführungsformen des Schlauchliners sind sowohl der Innenfolienschlauch 2 als auch der Außenfolienschlauch 3 jeweils aus mindestens einer Schlauchbahn 5 gebildet, die eine Trägerfolie 6 und eine Vliesschicht 7 aufweist und analog zu den Fign. 1 bis 5 ausgebildet ist.

Statt lichthärtender Harze kann die Fasermateriallage 4 auch andere aushärtbare Materialien aufweisen, wie z.B. durch Kalthärtung aushärtende Materialien oder durch Wärme aushärtende Materialien, welche durch Warmwasser oder Dampf ausgehärtet werden, mit denen der Schlauchliner beaufschlagt wird.

## Patentansprüche

1. Schlauchliner (1) zur Auskleidung von Rohrleitungen, mit einem Innenfolienschlauch (2), einem Außenfolienschlauch (3) und einer dazwischen angeordneten Fasermateriallage (4), die mit einem aushärtbaren Material imprägniert ist, wobei mindestens einer der beiden Folienschläuche (2, 3) aus mindestens einer Schlauchbahn (5; 5₁, 5₂) gebildet ist, die eine Trägerfolie (6) und eine Vliesschicht (7) aufweist, welche auf die der Fasermateriallage (4) zugewandte Folienseite der Trägerfolie (6) aufgebracht ist, und deren in Schlauchumfangsrichtung einander überlappende Bahnränder (5a, 5b) miteinander verbunden sind,
**dadurch gekennzeichnet,**
**dass** der der Fasermateriallage (4) im Überlappungsbereich (8) abgewandte Bahnrand (5a) einzig durch die Trägerfolie (6) gebildet ist, die auf dem Überlappungsbereich (8) über die Vliesschicht (7) übersteht und die unmittelbar mit der Trägerfolie (6) des der Fasermateriallage (4) im Überlappungsbereich (8) zugewandten Bahnrandes (5b) verklebt oder verschweißt ist.

2. Schlauchliner nach Anspruch 1, **dadurch gekennzeichnet, dass** sowohl der Innenfolienschlauch (2) als auch der Außenfolienschlauch (3) jeweils aus mindestens einer Schlauchbahn (5; 5₁, 5₂) gebildet sind, die eine Trägerfolie (6) und eine Vliesschicht (7) aufweist, welche auf die der Fasermateriallage (4) zugewandte Folienseite der Trägerfolie (6) aufgebracht ist, und deren in Schlauchumfangsrichtung einander überlappende Bahnränder (5a, 5b) miteinander verbunden sind, und dass die der Fasermateriallage (4) im Überlappungsbereich (8) abgewandten Bahnrand (5a) jeweils einzig durch die Trägerfolie (6) gebildet sind, die auf dem Überlappungsbereich (8) über die Vliesschicht (7) übersteht und die unmittelbar mit der Trägerfolie (6) des der Fasermateriallage (4) im Überlappungsbereich (8) zugewandten Bahnrandes (5b) verklebt oder verschweißt ist.

3. Schlauchliner nach Anspruch 1 oder 2, **dadurch gekennzeichnet, dass** an dem der Fasermateriallage (4) im Überlappungsbereich (8) zugewandten Bahnrand (5b) die Trägerfolie (6) und die aufkaschierte Vliesschicht (7) bündig miteinander abschließen.

4. Schlauchliner nach einem der vorhergehenden Ansprüche, **dadurch gekennzeichnet, dass** der mindestens eine Folienschlauch (2, 3) aus mindestens zwei Schlauchbahnen (5₁, 5₂) gebildet ist.

5. Schlauchliner nach Anspruch 4, **dadurch gekennzeichnet, dass** die mindestens zwei Schlauchbahnen (5₁, 5₂) jeweils einen vlieskaschierten bündigen Bahnrand (5b) und einen überstehenden Trägerfolienrand (5a) aufweisen.

6. Schlauchliner nach Anspruch 4, **dadurch gekennzeichnet, dass** die eine Schlauchbahn (5₂) zwei vlieskaschierte bündige Bahnränder und die andere Schlauchbahn (5₁) überstehende Trägerfolienränder aufweist.

7. Schlauchliner nach einem der vorhergehenden Ansprüche, **dadurch gekennzeichnet, dass** der Bahnrand (5b), an dem die Trägerfolie (6) und die Vliesschicht (7) bündig miteinander abschließen, über den anderen vlieslosen Bahnrand (5a) hinausragt.

8. Schlauchliner nach einem der vorhergehenden Ansprüche, **dadurch gekennzeichnet, dass** die Trägerfolie (6) aus einer einzigen Folienschicht gebildet ist.

9. Schlauchliner nach einem der Ansprüche 1 bis 7, **dadurch gekennzeichnet, dass** die Trägerfolie (6) aus mehreren Folienschichten gebildet ist.

10. Schlauchliner nach Anspruch 9, **dadurch gekennzeichnet, dass** die beiden äußeren Folienschichten aus dem gleichem Material bestehen.

## Claims

1. A tube liner (1) for lining pipelines, comprising an inner film tube (2), an outer film tube (3), and an interdisposed layer (4) of fibre material which is impregnated with a curable material, wherein at least one of the two film tubes (2, 3) is formed by at least one tube web (5; 5₁, 5₂) which comprises a carrier film (6) and a fleece layer (7) which is applied to the film side of the carrier film (6) that is facing the layer (4) of fibre material, and the web edges (5a, 5b) of which that overlap one another in the circumferential direction of the tube are connected to one another,
**characterized in**
**that** the web edge (5a) that in the overlap region (8) is facing away from the layer (4) of fibre material is formed singularly by the carrier film (6) which in the overlap region (8) protrudes beyond the fleece layer (7) and which is adhesively bonded or welded directly to the carrier film (6) of the web edge (5b) that in the overlap region (8) is facing the layer (4) of fibre material.

2. The tube liner as claimed in claim 1, **characterized in that** both the inner film tube (2) as well as the outer film tube (3) each are formed by at least one tube web (5; 5₁, 5₂) which comprises a carrier film (6) and a fleece layer (7) which is applied to the film side of the carrier film (6) that is facing the layer (4) of fibre material, and the web edges (5a, 5b) of which that overlap one another in the circumferential direction of the tube are connected to one another, and **in that** the web edges (5a) that in the overlap region (8) are facing away from the layer (4) of fibre material each are formed singularly by the carrier film (6) which in the overlap region (8) protrudes beyond the fleece layer (7) and which is adhesively bonded or welded directly to the carrier film (6) of the web edge (5b) that in the overlap region (8) is facing the layer (4) of fibre material.

3. The tube liner as claimed in claim 1 or 2, **characterized in that** the carrier film (6) and the laminated fleece layer (7) terminate so as to be mutually flush on the web edge (5b) that is facing the layer (4) of fibre material in the overlap region (8).

4. The tube liner as claimed in one of the preceding claims, **characterized in that** the at least one film tube (2, 3) is formed by at least two tube webs (5₁, 5₂).

5. The tube liner as claimed in claim 4, **characterized in that** the at least two tube webs (5₁, 5₂) each have a flush web edge (5b) that is fleece-laminated, and a protruding carrier film edge (5a).

6. The tube liner as claimed in claim 4, **characterized in that** the one tube web (5₂) has two flush web edges that are fleece-laminated, and the other tube web (5₁) has protruding carrier film edges.

7. The tube liner as claimed in one of the preceding claims, **characterized in that** the web edge (5b) on which the carrier film (6) and the fleece layer (7) terminate so as to be mutually flush protrudes beyond the other web edge (5a) that is free from a fleece material.

8. The tube liner as claimed in one of the preceding claims, **characterized in that** the carrier film (6) is formed by a single film layer.

9. The tube liner as claimed in one of claims 1 to 7, **characterized in that** the carrier film (6) is formed by a plurality of film layers.

10. The tube liner as claimed in claim 9, **characterized in that** the two outer film layers are composed of the same material.

## Revendications

1. Gaine de réfection (1) pour l'habillage de conduites, avec une gaine intérieure de film (2), une gaine extérieure de film (3) et une couche de matière fibreuse (4), qui est disposée entre ces dernières et qui est imprégnée d'une matière durcissable, sachant qu'au moins une des deux gaines de film (2, 3) est constituée d'au moins une bande tubulaire (5 ; 5₁, 5₂), qui présente un film de support (6) et une couche de non-tissé (7), appliquée sur la face du film de support (6) qui est tournée vers la couche de matière fibreuse (4), et dont les bords de bande (5a, 5b) se chevauchant mutuellement dans la direction périphérique de la gaine sont reliés entre eux,
**caractérisée en ce que** le bord de bande (5a) opposé à la couche de matière fibreuse (4) dans la zone de chevauchement (8) est formé uniquement par le film de support (6), qui dépasse de la couche de non-tissé (7) sur la zone de chevauchement (8) et qui est collé ou soudé directement au film de support (6) du bord de bande (5b) tourné vers la couche de matière fibreuse (4) dans la zone de chevauchement (8).

2. Gaine de réfection selon la revendication 1, **caractérisée en ce que** tant la gaine intérieure de film (2) que la gaine extérieure de film (3) sont respectivement constituées d'au moins une bande tubulaire (5 ; 5₁, 5₂), qui présente un film de support (6) et une couche de non-tissé (7), appliquée sur la face du film de support (6) qui est tournée vers la couche de matière fibreuse (4), et dont les bords de bande (5a, 5b) se chevauchant mutuellement dans la direction périphérique de la gaine sont reliés entre eux, et **en ce que** les bords de bande (5a) opposés à la couche de matière fibreuse (4) dans la zone de chevauchement (8) sont respectivement formés uniquement par le film de support (6), qui dépasse de la couche de non-tissé (7) sur la zone de chevauchement (8) et qui est collé ou soudé directement au film de support (6) du bord de bande (5b) tourné vers la couche de matière fibreuse (4) dans la zone de chevauchement (8).

3. Gaine de réfection selon la revendication 1 ou 2, **caractérisée en ce que**, au niveau du bord de bande (5b) tourné vers la couche de matière fibreuse (4) dans la zone de chevauchement (8), le film de support (6) et la couche de non-tissé contrecollée (7) se terminent en affleurement mutuel.

4. Gaine de réfection selon l'une des revendications précédentes, **caractérisée en ce que** la gaine de film au moins unique (2, 3) est constituée d'au moins deux bandes tubulaires (5₁, 5₂).

5. Gaine de réfection selon la revendication 4, **caractérisée en ce que** les au moins deux bandes tubulaires (5₁, 5₂) présentent respectivement un bord de bande affleurant (5b) contrecollé de non-tissé et un bord de film de support dépassant (5a).

6. Gaine de réfection selon la revendication 4, **caractérisée en ce que** l'une (5₂) des bande tubulaires présente deux bords de bande affleurants contrecollés de non-tissé, et l'autre bande tubulaire (5₁) présente des bords de film de support dépassants.

7. Gaine de réfection selon l'une des revendications précédentes, **caractérisée en ce que** le bord de bande (5b), au niveau duquel le film de support (6) et la couche de non-tissé (7) se terminent en affleurement mutuel, dépasse de l'autre bord de bande (5a) dépourvu de non-tissé.

8. Gaine de réfection selon l'une des revendications précédentes, **caractérisée en ce que** le film de support (6) est constitué d'une unique couche de film.

9. Gaine de réfection selon l'une des revendications 1 à 7, **caractérisée en ce que** le film de support (6) est constitué de plusieurs couches de film.

10. Gaine de réfection selon la revendication 9, **caractérisée en ce que** les deux couches de film extérieures sont constituées du même matériau.
